# EUROPÄISCHE PATENTSCHRIFT

(11) **EP 2 655 932 B1**
(45) Veröffentlichungstag und Bekanntmachung des Hinweises auf die Patenterteilung: **24.12.2014**
(21) Anmeldenummer: 11785414.1
(22) Anmeldetag: 21.11.2011
(51) Int. Cl.: F16H 3/62, F16H 3/66

(54) **MEHRSTUFENGETRIEBE**
MULTISTEP GEAR MECHANISM
BOÎTE DE VITESSES MULTIÉTAGÉE

(30) Priorität: 21.12.2010 DE 102010063643
(43) Veröffentlichungstag der Anmeldung: 30.10.2013
(73) Patentinhaber: ZF Friedrichshafen AG, 88038 Friedrichshafen (DE)
(72) Erfinder: GUMPOLTSBERGER, Gerhard, 88048 Friedrichshafen (DE); SIBLA, Christian, 88045 Friedrichshafen (DE); BECK, Stefan, 88097 Eriskirch (DE); WECHS, Michael, 88138 Sigmarszell (DE)
(86) Internationale Anmeldenummer: PCT/EP2011/070518
(87) Internationale Veröffentlichungsnummer: WO 2012/084374

(56) Entgegenhaltungen:
- DE-A1-102005 032 884
- DE-A1-102008 000 428
- JP-A- 2009 270 667

## Beschreibung

Die vorliegende Erfindung betrifft ein Mehrstufengetriebe in Planetenbauweise, insbesondere für ein Kraftfahrzeug, gemäß dem Oberbegriff des Patentanspruchs 1.

Mehrstufengetriebe in Planetenbauweise, insbesondere für Kraftfahrzeuge, umfassen nach dem Stand der Technik Planetenradsätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Mehrstufengetriebe in Planetenbauweise ist beispielsweise aus der DE 199 49 507 A1 der Anmelderin bekannt; hierbei sind an der Antriebswelle zwei nicht schaltbare Vorschaltradsätze vorgesehen, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Unter Verwendung von fünf Schaltelementen werden hierbei sieben Vorwärtsgänge erzielt, unter Verwendung von sechs Schaltelementen neun oder zehn Vorwärtsgänge.

Ferner ist aus der DE 29 36 969 A1 ein 9-Gang-Mehrstufengetriebe bekannt; es umfasst acht Schaltelemente und vier Planetenradsätze, wobei ein Planetenradsatz als Vorschaltgetriebe dient und das Hauptgetriebe einen Simpson-Satz und einen weiteren als Umkehrgetriebe dienenden Planetenradsatz aufweist.

Weitere Mehrstufengetriebe sind beispielsweise aus der DE 10 2005 032 884 A1 DE 10 2005 010 210 A1 und der DE 10 2006 006 637 A1 der Anmelderin bekannt.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschaltungen, d.h. ein Zu- bzw. Abschalten von zwei Schaltelementen vermeiden, so dass bei Schaltungen in definierten Ganggruppen jeweils nur ein Schaltelement gewechselt wird.

Aus der DE 10 2008 000 428 A1 der Anmelderin ist ein Mehrstufengetriebe in Planetenbauweise bekannt, welches einen Antrieb und einen Abtrieb aufweist, welche in einem Gehäuse angeordnet sind. Bei dem bekannten Getriebe sind zumindest vier Planetenradsätze, im Folgenden als erster, zweiter, dritter und vierter Planetenradsatz bezeichnet, mindestens acht drehbare Wellen - im Folgenden als Antriebswelle, Abtriebswelle, dritte, vierte, fünfte, sechste, siebte und achte Welle bezeichnet sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar sind.

Hierbei bilden der erste und der zweite Planetenradsatz, die vorzugsweise als Minus-Planetenradsätze, also mit negativer Standgetriebe-Übersetzung, ausgebildet sind, einen schaltbaren Vorschaltradsatz, wobei der dritte und der vierte Planetenradsatz einen Hauptradsatz bilden.

Bei dem bekannten Mehrstufengetriebe ist vorgesehen, dass die Stege des ersten und des zweiten Planetenradsatzes über die vierte Welle miteinander gekoppelt sind, welche mit einem Element des Hauptradsatzes verbunden ist, dass das Hohlrad des ersten Planetenradsatzes mit dem Sonnenrad des zweiten Planetenradsatzes über die achte Welle gekoppelt ist, welche über eine erste Kupplung mit der Antriebswelle lösbar verbindbar ist und dass das Sonnenrad des ersten Planetenradsatzes mittels der dritten Welle über eine erste Bremse an ein Gehäuse des Getriebes ankoppelbar und über eine zweite Kupplung mit der Antriebswelle lösbar verbindbar ist, wobei das Hohlrad des zweiten Planetenradsatzes mittels der fünften Welle über eine zweite Bremse an ein Gehäuse des Getriebes ankoppelbar ist. Zudem ist die siebte Welle mit zumindest einem Element des Hauptradsatzes ständig verbunden und über eine dritte Bremse an das Gehäuse des Getriebes ankoppelbar, wobei die sechste Welle mit zumindest einem weiteren Element des Hauptradsatzes ständig verbunden und über eine dritte Kupplung mit der Antriebswelle lösbar verbindbar ist; die Abtriebswelle ist mit zumindest einem weiteren Element des Hauptradsatzes ständig verbunden.

Vorzugsweise ist bei dem bekannten Getriebe die vierte Welle ständig mit dem Hohlrad des dritten Planetenradsatzes verbunden, wobei die sechste Welle ständig mit dem Hohlrad des vierten Planetenradsatzes und dem Steg des dritten Planetenradsatzes verbunden und über die dritte Kupplung mit der Antriebswelle lösbar verbindbar ist. Ferner ist die siebte Welle ständig mit den Sonnenrädern des dritten und vierten Planetenradsatzes verbunden und über die dritte Bremse an ein Gehäuse des Getriebes ankoppelbar. Der Abtrieb erfolgt hierbei über die ständig mit dem Steg des vierten Planetenradsatzes verbundene Abtriebswelle. Des Weiteren können der dritte und der vierte Planetenradsatz zu einem Ravigneaux-Satz mit einem gemeinsamen Steg und einem gemeinsamen Hohlrad zusammengesetzt bzw. reduziert sein.

Der vorliegenden Erfindung liegt die Aufgabe zugrunde, ein Mehrstufengetriebe der eingangs genannten Art vorzuschlagen, welches neun Vorwärtsgänge und einen Rückwärtsgang mit ausreichender Übersetzung aufweist, bei dem der Bauaufwand und die Baugröße, insbesondere die Baulänge, bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Stützmomente auf die Schaltelemente wirken. Das erfindungsgemäße Getriebe soll insbesondere für einen Längseinbau aber auch für einen Quereinbau im Fahrzeug geeignet sein.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des Weiteren sind zumindest vier Planetenradsätze, im Folgenden als erster, zweiter, dritter und vierter Planetenradsatz bezeichnet, neun drehbare Wellen - im Folgenden als Antriebswelle, Abtriebswelle, dritte, vierte, fünfte, sechste, siebte, achte und neunte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar sind.

Die Planetenradsätze sind axial betrachtet vorzugsweise in der Reihenfolge erster Planetenradsatz, zweiter Planetenradsatz, dritter Planetenradsatz, vierter Planetenradsatz oder erster Planetenradsatz, zweiter Planetenradsatz, vierter Planetenradsatz, dritter Planetenradsatz angeordnet und sind vorzugsweise als Minus-Planetenradsätze ausgebildet.

Ein einfacher Minus-Planetenradsatz umfasst bekanntlich ein Sonnenrad, ein Hohlrad und einen Steg, an dem Planetenräder drehbar gelagert sind, die jeweils mit Sonnenrad und Hohlrad kämmen. Hierdurch weist das Hohlrad bei festgehaltenem Steg eine zum Sonnenrad entgegengesetzte Drehrichtung auf. Demgegenüber umfasst ein einfacher Plus-Planetenradsatz ein Sonnenrad, ein Hohlrad und einen Steg, an dem innere und äußere Planetenräder drehbar gelagert sind, wobei alle inneren Planetenräder mit dem Sonnenrad und alle äußeren Planetenräder mit dem Hohlrad kämmen, wobei jedes innere Planetenrad mit jeweils einem äußeren Planetenrad kämmt. Hierdurch weist das Hohlrad bei festgehaltenem Steg die gleiche Drehrichtung auf wie das Sonnenrad und es ergibt sich eine positive Standgetriebeübersetzung.

Gemäß der Erfindung ist das Sonnenrad des ersten Planetenradsatzes mit der fünften Welle verbunden, die mit dem Hohlrad des dritten Planetenradsatzes verbunden und über eine erste Kupplung mit der mit dem Steg des zweiten Planetenradsatzes verbundenen achten Welle lösbar verbindbar ist, welche über eine zweite Kupplung mit der mit dem Sonnenrad des dritten Planetenradsatzes und dem Sonnenrad des vierten Planetenradsatzes verbundenen neunten Welle lösbar verbindbar ist.

Des Weiteren ist der Steg des ersten Planetenradsatzes mit der Antriebswelle verbunden, welche über eine dritte Kupplung mit der mit dem Hohlrad des zweiten Planetenradsatzes verbundenen sechsten Welle lösbar verbindbar ist, wobei das Sonnenrad des zweiten Planetenradsatzes mit der dritten Welle verbunden ist, welche mit dem Steg des dritten Planetenradsatzes verbunden und über eine erste Bremse an das Gehäuse des Getriebes ankoppelbar ist.

Gemäß der Erfindung ist das Hohlrad des vierten Planetenradsatzes mit der vierten Welle verbunden, die über eine zweite Bremse an das Gehäuse des Getriebes ankoppelbar ist, wobei die Abtriebswelle mit dem Steg des vierten Planetenradsatzes verbunden und über eine vierte Kupplung mit der mit dem Hohlrad des ersten Planetenradsatzes verbundenen siebten Welle lösbar verbindbar ist.

Durch die erfindungsgemäße Ausgestaltung des Mehrstufengetriebes ergeben sich insbesondere für Personenkraftwagen geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des Weiteren ergibt sich bei dem erfindungsgemäßen Mehrstufengetriebe ein guter Wirkungsgrad in den Hauptfahrgängen bezüglich der Schlepp- und Verzahnungsverluste.

Ferner liegen geringe Drehmomente in den Schaltelementen und in den Planetenradsätzen des Mehrstufengetriebes vor, wodurch der Verschleiß bei dem Mehrstufengetriebe in vorteilhafter Weise reduziert wird. Zudem wird durch die geringen Drehmomente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetenradsätzen vor.

Die Kupplungen und die Bremsen des Getriebes können als Reibschaltelemente bzw. Lamellenschaltelemente ausgeführt sein, die den Vorteil aufweisen, dass sie unter Last schaltbar sind. Schaltelemente im Sinne der Erfindung können jedoch auch als formschlüssige Schaltelemente wie z.B. synchronisierte oder unsynchronisierte Klauenkupplungen oder -bremsen ausgebildet sein. Ein erfindungsgemäßes Getriebe kann dabei ausschließlich Reibschaltelemente oder eine Kombination von Reibschaltelementen und formschlüssigen Schaltelementen umfassen. Formschlüssige Schaltelemente werden dabei vorzugsweise an Stellen eingesetzt, bei denen dieses Schaltelement nicht unter Last zugeschaltet können werden muss, was beispielsweise in den Anfahrgängen der Fall sein kann oder in sehr lang übersetzten hohen Gängen bei denen eine kurze Zugkraftunterbrechung aufgrund des geringen Zugkraftniveaus ohne merkliche Komforteinbußen tolerierbar ist. Aufgrund der kompakten Bauform des erfindungsgemäßen Getriebes ist es sowohl für einen Längseinbau als auch für einen Quereinbau im Fahrzeug geeignet.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der beigefügten Figuren beispielhaft näher erläutert. In diesen stellen dar:
- Figur 1:: Eine schematische Ansicht einer bevorzugten Ausführungsform eines erfindungsgemäßen Mehrstufengetriebes; und
- Figur 2:: Ein beispielhaftes Schaltschema für ein Mehrstufengetriebe gemäß Figur 1.

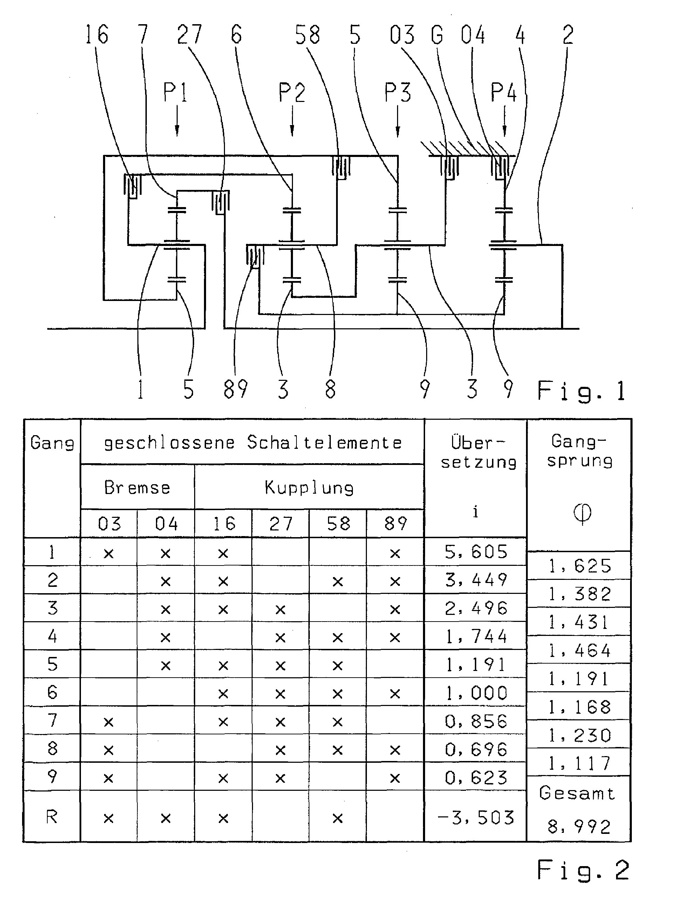

In Figur 1 ist ein erfindungsgemäßes Mehrstufengetriebe mit einer Antriebswelle 1, einer Abtriebswelle 2 und vier Planetenradsätzen P1, P2, P3 und P4 dargestellt, welche in einem Gehäuse G angeordnet sind. Die Planetenradsätze P1, P2, P3 und P4 sind bei dem in Figur 1 gezeigten Beispiel als Minus-Planetenradsätze ausgebildet. Gemäß der Erfindung kann zumindest ein Planetenradsatz als Plus-Planetenradsatz ausgeführt sein, wenn gleichzeitig die Steg- und Hohlradanbindung getauscht und der Betrag der Standgetriebeübersetzung im Vergleich zu der Ausführung als Minus-Planetenradsatz um 1 erhöht wird.

Bei dem gezeigten Ausführungsbeispiel sind die Planetenradsätze axial betrachtet in der Reihenfolge P1, P2, P3, P4 angeordnet.

Wie aus Figur 1 ersichtlich, sind sechs Schaltelemente, nämlich zwei Bremsen 03, 04 und vier Kupplungen 16, 27, 58 und 89 vorgesehen. Die räumliche Anordnung der Schaltelemente kann beliebig sein und wird nur durch die Abmessungen und die äußere Formgebung begrenzt. Die Kupplungen und die Bremsen des Getriebes sind vorzugsweise als Reibschaltelemente bzw. Lamellenschaltelemente ausgeführt.

Mit diesen Schaltelementen ist ein selektives Schalten von neun Vorwärtsgängen und einem Rückwärtsgang realisierbar. Das erfindungsgemäße Mehrstufengetriebe weist insgesamt neun drehbare Wellen auf, nämlich die Wellen 1, 2, 3, 4, 5, 6, 7, 8 und 9, wobei die Antriebswelle die erste Welle und die Abtriebswelle die zweite Welle des Getriebes bildet.

Erfindungsgemäß ist bei dem Mehrstufengetriebe gemäß Figur 1 vorgesehen, dass das Sonnenrad des ersten Planetenradsatzes P1 mit der fünften Welle 5 verbunden ist, welche mit dem Hohlrad des dritten Planetenradsatzes P3 verbunden und über eine erste Kupplung 58 mit der mit dem Steg des zweiten Planetenradsatzes P2 verbundenen achten Welle 8 lösbar verbindbar ist, die über eine zweite Kupplung 89 mit der mit dem Sonnenrad des dritten Planetenradsatzes P3 und dem Sonnenrad des vierten Planetenradsatzes P4 verbundenen neunten Welle 9 lösbar verbindbar ist.

Gemäß der Erfindung und bezugnehmend auf Figur 1 ist der Steg des ersten Planetenradsatzes P1 mit der Antriebswelle 1 des Getriebes verbunden, welche über eine dritte Kupplung 16 mit der mit dem Hohlrad des zweiten Planetenradsatzes P2 verbundenen sechsten Welle 6 lösbar verbindbar ist; das Sonnenrad des zweiten Planetenradsatzes P2 ist mit der dritten Welle 3 verbunden, welche mit dem Steg des dritten Planetenradsatzes P3 verbunden und über eine erste Bremse 03 an das Gehäuse G des Getriebes ankoppelbar ist.

Ferner ist das Hohlrad des vierten Planetenradsatzes P4 mit der vierten Welle 4 verbunden, die über eine zweite Bremse 04 an das Gehäuse G des Getriebes ankoppelbar ist, wobei die Abtriebswelle 2 mit dem Steg des vierten Planetenradsatzes P4 verbunden und über eine vierte Kupplung 27 mit der mit dem Hohlrad des ersten Planetenradsatzes P1 verbundenen siebten Welle 7 lösbar verbindbar ist.

Die erste und die zweite Bremse 03, 04 können axial betrachtet nebeneinander angeordnet sein. Zudem können die vierte Kupplung 27 und die zweite Kupplung 89 axial betrachtet vorzugsweise zwischen dem ersten Planetenradsatz P1 und dem zweiten Planetenradsatz P2 angeordnet sein.

In Figur 2 ist ein beispielhaftes Schaltschema eines Mehrstufengetriebes gemäß Figur 1 dargestellt. Für jeden Gang werden vier Schaltelemente geschlossen. Dem Schaltschema können die jeweiligen Übersetzungen i der einzelnen Gangstufen und die daraus zu bestimmenden Gangsprünge bzw. Stufensprünge φ zum nächst höheren Gang beispielhaft entnommen werden, wobei der Wert 8,992 die Spreizung des Getriebes darstellt.

Typische Werte für die Standgetriebeübersetzungen der als Minus-Planetenradsätze ausgeführten Planetenradsätze P1, P2, P3 und P4 sind jeweils -2,292, -1,600, -1,600 und -2,449. Aus Figur 2 wird ersichtlich, dass bei sequentieller Schaltweise jeweils nur ein Schaltelement zugeschaltet und ein Schaltelement abgeschaltet werden muss, da zwei benachbarte Gangstufen drei Schaltelemente gemeinsam benutzen. Ferner wird ersichtlich, dass eine große Spreizung bei kleinen Gangsprüngen erzielt wird.

Der erste Vorwärts-Gang ergibt sich durch Schließen der ersten und zweiten Bremse 03, 04 und der zweiten und dritten Kupplung 89, 16, der zweite VorwärtsGang durch Schließen der zweiten Bremse 04 und der ersten, zweiten und dritten Kupplung 58, 89, 16, der dritte Vorwärts-Gang durch Schließen der zweiten Bremse 04 und der zweiten, dritten und vierten Kupplung 89, 16, 27, der vierte Vorwärts-Gang durch Schließen der zweiten Bremse 04 und der ersten, zweiten und vierten Kupplung 58, 89, 27, der fünfte Vorwärts-Gang durch Schließen der zweiten Bremse 04 und der ersten, dritten und vierten Kupplung 58, 16, 27, der als Direktgang ausgeführte sechste Vorwärts-Gang durch Schließen sämtlicher Kupplungen 16, 27, 58, 89, der siebte Vorwärts-Gang durch Schließen der ersten Bremse 03 und der ersten, dritten und vierten Kupplung 58, 16, 27, der achte Vorwärts-Gang durch Schließen der ersten Bremse 03 und der ersten, zweiten und vierten Kupplung 58, 89, 27 und der neunte Vorwärts-Gang ergibt sich durch Schließen der ersten Bremse 03 und der zweiten, dritten und vierten Kupplung 89, 16, 27, wobei sich der Rückwärtsgang durch Schließen der ersten und zweiten Bremse 03, 04 und der ersten und dritten Kupplung 58, 16 ergibt.

Dadurch, dass im ersten Vorwärtsgang und im ersten Rückwärtsgang die erste und zweite Bremse 03, 04 und die dritte Kupplung 16 geschlossen sind, können diese Schaltelemente als Anfahrelemente eingesetzt werden.

Gemäß der Erfindung ergeben sich auch bei gleichem Getriebeschema je nach Schaltlogik unterschiedliche Gangsprünge, so dass eine anwendungs- bzw. fahrzeugspezifische Variation ermöglicht wird.

Erfindungsgemäß ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 1 durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Antriebsmotors verbunden ist.

Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des Weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltbare Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

### Bezugszeichen

- 1: erste Welle, Antriebswelle
- 2: zweite Welle, Abtriebswelle
- 3: dritte Welle
- 4: vierte Welle
- 5: fünfte Welle
- 6: sechste Welle
- 7: siebte Welle
- 8: achte Welle
- 9: neunte Welle
- 03: erste Bremse
- 04: zweite Bremse
- 16: dritte Kupplung
- 27: vierte Kupplung
- 58: erste Kupplung
- 89: zweite Kupplung
- P1: erster Planetenradsatz
- P2: zweiter Planetenradsatz
- P3: dritter Planetenradsatz
- P4: vierter Planetenradsatz
- i: Übersetzung
- φ: Stufensprung
- G: Gehäuse

## Patentansprüche

1. Mehrstufengetriebe in Planetenbauweise, insbesondere für ein Kraftfahrzeug, mit einer Antriebswelle (1), einer Abtriebswelle (2), einem Gehäuse (G), einem ersten Planetenradsatz (P1), einem zweiten Planetenradsatz (P2), einem dritten Planetenradsatz (P3) und einem vierten Planetenradsatz (P4), wobei die Planetenradsätze jeweils ein Sonnenrad, einen Steg und ein Hohlrad umfassen, mit mehreren drehbaren Wellen (1, 2, 3, 4, 5, 6, 7, 8, 9) sowie mehreren Schaltelementen (03, 04, 16, 27, 58, 89), umfassend Bremsen (03, 04) und Kupplungen (16, 27, 58, 89), deren selektives Eingreifen verschiedene Übersetzungsverhältnisse zwischen der Antriebswelle (1) und der Abtriebswelle (2) bewirkt, wobei das Sonnenrad des ersten Planetenradsatzes (P1) mit einer fünften Welle (5) verbunden ist, welche mit dem Hohlrad des dritten Planetenradsatzes (P3) verbunden und über eine erste Kupplung (58) mit einer mit dem Steg des zweiten Planetenradsatzes (P2) verbundenen achten Welle (8) lösbar verbindbar ist, die über eine zweite Kupplung (89) mit einer mit dem Sonnenrad des dritten Planetenradsatzes (P3) und dem Sonnenrad des vierten Planetenradsatzes (P4) verbundenen neunten Welle (9) lösbar verbindbar ist, wobei der Steg des ersten Planetenradsatzes (P1) mit der Antriebswelle (1) verbunden ist, welche über eine dritte Kupplung (16) mit einer mit dem Hohlrad des zweiten Planetenradsatzes (P2) verbundenen sechsten Welle (6) lösbar verbindbar ist, wobei das Sonnenrad des zweiten Planetenradsatzes (P2) mit einer dritten Welle (3) verbunden ist, welche mit dem Steg des dritten Planetenradsatzes (P3) verbunden und über eine erste Bremse (03) an das Gehäuse (G) des Getriebes ankoppelbar ist, wobei das Hohlrad des vierten Planetenradsatzes (P4) mit einer vierten Welle (4) verbunden ist, die über eine zweite Bremse (04) an das Gehäuse (G) des Getriebes ankoppelbar ist und wobei die Abtriebswelle (2) mit dem Steg des vierten Planetenradsatzes (P4) verbunden und über eine vierte Kupplung (27) mit einer mit dem Hohlrad des ersten Planetenradsatzes (P1) verbundenen siebten Welle (7) lösbar verbindbar ist.

2. Mehrstufengetriebe nach Anspruch 1, **dadurch gekennzeichnet, dass** neun drehbare Wellen sowie sechs Schaltelemente, nämlich zwei Bremsen und vier Kupplungen vorgesehen sind.

3. Mehrstufengetriebe nach Anspruch 1 oder 2, **dadurch gekennzeichnet, dass** die Planetenradsätze (P1, P2, P3, P4) als Minus-Planetenradsätze ausgebildet sind.

4. Mehrstufengetriebe nach Anspruch 1, 2 oder 3, **dadurch gekennzeichnet, dass** sich der erste Vorwärts-Gang durch Schließen der ersten und zweiten Bremse (03, 04) und der zweiten und dritten Kupplung (89, 16), der zweite Vorwärts-Gang durch Schließen der zweiten Bremse (04) und der ersten, zweiten und dritten Kupplung (58, 89, 16), der dritte Vorwärts-Gang durch Schließen der zweiten Bremse (04) und der zweiten, dritten und vierten Kupplung (89, 16, 27), der vierte Vorwärts-Gang durch Schließen der zweiten Bremse (04) und der ersten, zweiten und vierten Kupplung (58, 89, 27), der fünfte Vorwärts-Gang durch Schließen der zweiten Bremse (04) und der ersten, dritten und vierten Kupplung (58, 16, 27), der sechste Vorwärts-Gang durch Schließen sämtlicher Kupplungen (16, 27, 58, 89), der siebte Vorwärts-Gang durch Schließen der ersten Bremse (03) und der ersten, dritten und vierten Kupplung (58, 16, 27), der achte Vorwärts-Gang durch Schließen der ersten Bremse (03) und der ersten, zweiten und vierten Kupplung (58, 89, 27) und dass sich der neunte Vorwärts-Gang durch Schließen der ersten Bremse (03) und der zweiten, dritten und vierten Kupplung (89, 16, 27) ergibt, wobei sich der Rückwärtsgang durch Schließen der ersten und zweiten Bremse (03, 04) und der ersten und dritten Kupplung (58, 16) ergibt.

## Claims

1. Multi-stage gearbox of planetary construction, in particular for a motor vehicle, having a drive input shaft (1), a drive output shaft (2), a housing (G), a first planetary gear set (P1), a second planetary gear set (P2), a third planetary gear set (P3) and a fourth planetary gear set (P4), wherein the planetary gear sets each comprise a sun gear, a web and an internal gear, having multiple rotatable shafts (1, 2, 3, 4, 5, 6, 7, 8, 9) and multiple shift elements (03, 04, 16, 27, 58, 89), comprising brakes (03, 04) and clutches (16, 27, 58, 89), the selective engagement of which generates different transmission ratios between the drive input shaft (1) and the drive output shaft (2), wherein the sun gear of the first planetary gear set (P1) is connected to a fifth shaft (5), which fifth shaft is connected to the internal gear of the third planetary gear set (P3) and is detachably connectable by means of a first clutch (58) to an eighth shaft (8), which eighth shaft is connected to the web of the second planetary gear set (P2) and is detachably connectable by means of a second clutch (89) to a ninth shaft (9), which ninth shaft is connected to the sun gear of the third planetary gear set (P3) and to the sun gear of the fourth planetary gear set (P4), wherein the web of the first planetary gear set (P1) is connected to the drive input shaft (1), which drive input shaft is detachably connectable by means of a third clutch (16) to a sixth shaft (6), which sixth shaft is connected to the internal gear of the second planetary gear set (P2), wherein the sun gear of the second planetary gear set (P2) is connected to a third shaft (3), which third shaft is connected to the web of the third planetary gear set (P3) and can be coupled by means of a first brake (03) to the housing (G) of the gearbox, wherein the internal gear of the fourth planetary gear set (P4) is connected to a fourth shaft (4), which fourth shaft can be coupled by means of a second brake (04) to the housing (G) of the gearbox, and wherein the drive output shaft (2) is connected to the web of the fourth planetary gear set (P4) and is detachably connectable by means of a fourth clutch (27) to a seventh shaft (7), which seventh shaft is connected to the internal gear of the first planetary gear set (P1).

2. Multi-stage gearbox according to Claim 1, **characterized in that** nine rotatable shafts and six shift elements, specifically two brakes and four clutches, are provided.

3. Multi-stage gearbox according to Claim 1 or 2, **characterized in that** the planetary gear sets (P1, P2, P3, P4) are configured as minus planetary gear sets.

4. Multi-stage gearbox according to Claim 1, 2 or 3, **characterized in that** the first forward gear is generated by closing the first and second brakes (03, 04) and the second and third clutches (89, 16), the second forward gear is generated by closing the second brake (04) and the first, second and third clutches (58, 89, 16), the third forward gear is generated by closing the second brake (04) and the second, third and fourth clutches (89, 16, 27), the fourth forward gear is generated by closing the second brake (04) and the first, second and fourth clutches (58, 89, 27), the fifth forward gear is generated by closing the second brake (04) and the first, third and fourth clutches (58, 16, 27), the sixth forward gear is generated by closing all of the clutches (16, 27, 58, 89), the seventh forward gear is generated by closing the first brake (03) and the first, third and fourth clutches (58, 16, 27), the eighth forward gear is generated by closing the first brake (03) and the first, second and fourth clutches (58, 89, 27), and **in that** the ninth forward gear is generated by closing the first brake (03) and the second, third and fourth clutches (89, 16, 27), wherein the reverse gear is generated by closing the first and second brakes (03, 04) and the first and third clutches (58, 16).

## Revendications

1. Boîte de vitesses multi-étagée de construction planétaire, en particulier pour un véhicule automobile, comprenant un arbre d'entraînement (1), un arbre de sortie (2), un boîtier (G), un premier train planétaire (P1), un deuxième train planétaire (P2), un troisième train planétaire (P3) et un quatrième train planétaire (P4), les trains planétaires comprenant chacun une roue solaire, un porte-satellites et une couronne dentée, comprenant plusieurs arbres rotatifs (1, 2, 3, 4, 5, 6, 7, 8, 9) ainsi que plusieurs éléments de commutation (03, 04, 16, 27, 58, 89), comprenant des freins (03, 04) et des embrayages (16, 27, 58, 89), dont l'engagement sélectif produit différents rapports de démultiplication entre l'arbre d'entraînement (1) et l'arbre de sortie (2), la roue solaire du premier train planétaire (P1) étant connectée à un cinquième arbre (5), qui est connecté à la couronne dentée du troisième train planétaire (P3) et qui peut être connecté de manière amovible par le biais d'un premier embrayage (58) à un huitième arbre (8), connecté au porte-satellites du deuxième train planétaire (P2), qui peut être connecté de manière amovible par le biais d'un deuxième embrayage (89) à un neuvième arbre (9), connecté à la roue solaire du troisième train planétaire (P3) et à la roue solaire du quatrième train planétaire (P4), le porte-satellites du premier train planétaire (P1) étant connecté à l'arbre d'entraînement (1) qui peut être connecté de manière amorible par le biais d'un troisième embrayage (16) à un sixième arbre (6), connecté à la couronne dentée du deuxième train planétaire (P2), la roue solaire du deuxième train planétaire (P2) étant connectée à un troisième arbre (3) qui est connecté au porte-satellites du troisième train planétaire (P3) et qui peut être accouplé par le biais d'un premier frein (03) au boîtier (G) de la transmission, la couronne dentée du quatrième train planétaire (P4) étant connectée à un quatrième arbre (4) qui peut être accouplé par le biais d'un deuxième frein (04) au boîtier (G) de la transmission et l'arbre de sortie (2) étant connecté au porte-satellites du quatrième train planétaire (P4) et pouvant être connecté de manière amovible par le biais d'un quatrième embrayage (27) à un septième arbre (7) connecté à la couronne dentée du premier train planétaire (P1).

2. Boîte de vitesses multi-étagée selon la revendication 1, **caractérisée en ce que** neuf arbres rotatifs ainsi que six éléments de commutation, à savoir deux freins et quatre embrayages sont prévus.

3. Boîte de vitesses multi-étagée selon la revendication 1 ou 2, **caractérisée en ce que** les trains planétaires (P1, P2, P3, P4) sont réalisés sous forme de trains planétaires négatifs.

4. Boîte de vitesses multi-étagée selon la revendication 1, 2 ou 3, **caractérisée en ce que** le premier rapport de marche avant s'obtient par fermeture du premier et du deuxième frein (03, 04) et du deuxième et du troisième embrayage (89, 16), le deuxième rapport de marche avant s'obtient par fermeture du deuxième frein (04) et du premier, deuxième et troisième embrayage (58, 89, 16), le troisième rapport de marche avant s'obtient par fermeture du deuxième frein (04) et du deuxième, troisième et quatrième embrayage (89, 16, 27), le quatrième rapport de marche avant s'obtient par fermeture du deuxième frein (04) et du premier, deuxième et quatrième embrayage (58, 89, 27), le cinquième rapport de marche avant s'obtient par fermeture du deuxième frein (04) et du premier, troisième et quatrième embrayage (58, 16, 27), le sixième rapport de marche avant s'obtient par fermeture de tous les embrayages (16, 27, 58, 89), le septième rapport de marche avant s'obtient par fermeture du premier frein (03) et du premier, troisième et quatrième embrayage (58, 16, 27), le huitième rapport de marche avant s'obtient par fermeture du premier frein (03) et du premier, deuxième et quatrième embrayage (58, 89, 27) et le neuvième rapport de marche avant s'obtient par fermeture du premier frein (03) et du deuxième, troisième et quatrième embrayage (89, 16, 27), le rapport de marche arrière s'obtenant par fermeture du premier et du deuxième frein (03, 04) et du premier et du troisième embrayage (58, 16).
